# EUROPEAN PATENT APPLICATION

(11) **EP 1 059 262 A1**
(43) Date of publication of application: **13.12.2000**
(21) Application number: 00304818.8
(22) Date of filing: 07.06.2000
(51) Int. Cl.: C01B 3/40, C01B 3/32, B01J 38/04, B01J 38/06

(54) **Fuel reforming apparatus**

(30) Priority: 08.06.1999 JP 16130799
(71) Applicant: MATSUSHITA ELECTRIC INDUSTRIAL CO., LTD., Kadoma-shi, Osaka 571-8501 (JP)
(72) Inventor: Kitagawa, Kouchiro, Kadoma-shi, Osaka 571-0064 (JP); Tomizawa, Takeshi, Ikoma-shi, Nara 630-0123 (JP); Ukai, Kunihiro, Ikoma-shi, Nara 630-0213 (JP); Shono, Toshiyuki, Soraku-gun, Kyoto 619-0237 (JP); Taguchi, Kiyoshi, Moriguchi-shi, Osaka 570-0008 (JP)
(74) Representative: Price, Paul Anthony King

(57) **Abstract**

The fuel reforming apparatus according to the present invention comprises a reforming unit (1) having a reforming catalyst (1a) for steam-reforming a raw material of a hydrocarbon and a heater (2) for heating the reforming unit to generate a hydrogen gas by heating the reforming unit while supplying the raw material and water to the heated reforming unit. This fuel reforming apparatus can recover the activity of the reforming catalyst by heating the reforming catalyst in a reducing atmosphere and, therefore, the present invention eliminates the need for replacing the poisoned reforming catalyst and makes it possible to recover with ease the decreased activity of the reforming catalyst.

## Description

### BACKGROUND OF THE INVENTION

The present invention relates to a fuel reforming apparatus that can recover activity of a reforming catalyst with decreased activity poisoned with sulfur components such as sulfur as the simple substance and sulfide.

As hydrogen to be supplied to fuel cells or the like, a hydrogen rich reformed gas generated by steam-reforming a hydrocarbon type fuel with a Ni type or Ru type reforming catalyst is generally used. As the hydrocarbon type fuel, city gas mainly composed of natural gas, liquefied petroleum gas, naphtha or kerosene is used, for example. Yet these fuels usually contain odorant as well as impurity, which is sulfur component.

For example, city gas obtained from natural gas and liquefied petroleum gas contain sulfide as odorant at a concentration of a few ppm. Also, kerosene contains sulfide as impurity at a concentration of tens of ppm. This contained sulfide poisons the reforming catalyst and decreases its activity, therefore such fuels as one of the raw material are generally desulfurated by means of a desulfurizer of adsorption type or hydrodesulfurization type as the pre-treatment.

However, if sulfide flows into the reforming unit and is adsorbed on the reforming catalyst because a desulfurizing agent filled in the desulfurizer is cracked after being used for a long time, the activity of the reforming unit is decreased. For this reason, in order to recover the decreased activity of the reforming catalyst poisoned with sulfide, it is necessary to remove the poisoned reforming catalyst from the fuel reforming apparatus to replace it with a new reforming catalyst.

Nevertheless, there is a problem that a replacement of the poisoned reforming catalyst with a new reforming catalyst, as mentioned above, requires decomposition of the fuel reforming apparatus, necessitating considerable time and labor. In addition, there is another problem that the available duration for use of the reforming catalyst is short, which results in high cost, because once poisoned reforming catalyst needs to be replaced with a new reforming catalyst.

In order to address these problems with a conventional fuel reforming apparatus, there is a need to provide a fuel reforming apparatus that can easily recover the activity of the reforming catalyst with decreased activity without the need for replacing the poisoned reforming catalyst. In other words, there is also a need to provide a method for recovering the activity of the reforming catalyst in the fuel reforming apparatus.

### BRIEF SUMMARY OF THE INVENTION

The present invention relates to a fuel reforming apparatus comprising a reforming unit equipped with a reforming catalyst in which a reforming reaction of a raw material containing a hydrogen proceeds by adding a water to said raw material and a heater for heating the above-mentioned reforming unit, the above-mentioned apparatus generating a hydrogen gas by heating the above reforming unit and supplying the raw material and water to the heated reforming unit, wherein activity of the reforming catalyst is recovered by heating the catalyst in a reducing atmosphere.

The above-mentioned apparatus may comprise a raw material supply unit for supplying the raw material containing hydrogen to the above-mentioned reforming unit. The water to reform the raw material may be supplied from the raw material supply unit or the below-described recovering gas supply unit.

In concrete, the fuel reforming apparatus may comprises a reforming unit equipped with a reforming catalyst for steam-reforming a raw material containing a hydrocarbon type fuel with water, a heater for heating the above reforming unit, and a raw material supply unit for supplying the above raw material and water to the above reforming unit, generating a hydrogen rich reformed gas by heating the above reforming unit while supplying the above raw materials to the above heated reforming unit, wherein activity of the reforming catalyst is recovered by heating the reforming catalyst in a reducing atmosphere.

Consequently, in the above fuel reforming apparatus, the present invention further relates to a method for recovering the activity of the above reforming catalyst by forming a reducing atmosphere in the reforming unit and heating under the reducing atmosphere the reforming catalyst inside the reforming unit.

In this constitution, by providing with a recovering gas (a reductive gas) supply unit for supplying an inert gas or water vapor (steam) to the reforming unit, the activity of the above reforming catalyst can be recovered by heating the reforming unit with the heater while supplying an inert gas or water vapor from the above recovering gas supply unit to the above reforming unit.

It is preferable to provide with a thermometer for detecting the temperature of the reforming catalyst, stop supplying the raw material such as a hydrocarbon type fuel from the raw material supply unit when the reforming catalyst has reached a predetermined temperature, heat the reforming unit with the heater while supplying an inert gas or water vapor to the reforming unit from the recovering gas supply unit, thereby to recover the activity of the reforming catalyst.

Further, it is preferable to provide with a sensor for detecting the concentration of hydrogen gas and recover the activity of the reforming catalyst, for example at stopping or starting of operation, or when the concentration of hydrogen gas in the reforming gas has become not less than the predetermined concentration.

In addition, it is preferable to provided with a desulfurizer for removing sulfide from the above-mentioned raw material of a hydrocarbon type fuel and supply the hydrocarbon type fuel from which sulfide is removed to the reforming unit.

### BRIEF DESCRIPTION OF THE SEVERAL VIEWS OF THE DRAWINGS

Fig. 1 is a schematic diagram showing the constitution of one embodiment of a fuel reforming apparatus according to the present invention.
Fig. 2 is a graph showing the relation between the duration of time for supplying the raw materials and the conversion rate of the hydrocarbon type fuel in a fuel reforming apparatus of the examples.
Fig. 3 is a graph showing the relation between the time for supplying the raw materials and the temperature of the reforming catalyst in a fuel reforming apparatus of the example.

### DETAILED DESCRIPTION OF THE PREFERRED EMBODIMENTS

The present invention relates to a fuel reforming apparatus comprising a reforming unit equipped with a reforming catalyst for steam-reforming a raw material containing a hydrocarbon type fuel with water, a heater for heating the above reforming unit, and raw material supply unit for supplying the raw material to the above reforming unit and generating a hydrogen gas (reformed gas) by heating the reforming unit while supplying the raw materials to the heated reforming unit from the raw material supply unit.

In order to solve the problem that the catalyst activity of the reforming catalyst decreases along with the operation and the use of the above fuel reforming apparatus, the inventors of the present invention made it possible to recover the activity of the reforming catalyst by heating the reforming catalyst in a reducing atmosphere.

In the followings, an embodiment of the present invention will be described referring to figures.

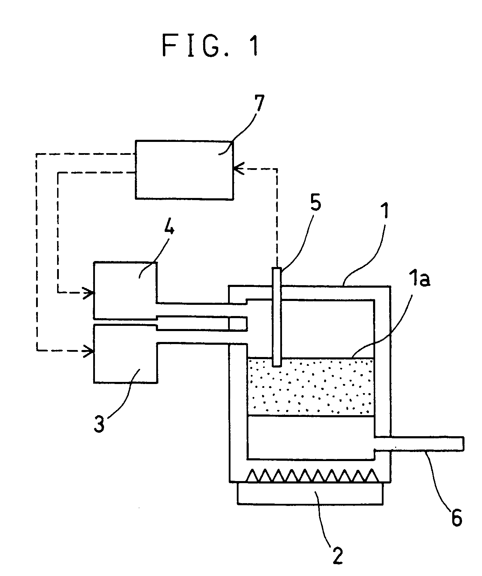

Fig. 1 is a schematic sectional diagram showing the constitution of one embodiment of a fuel reforming apparatus according to the present invention. The fuel reforming apparatus as shown is Fig. 1 comprises a reforming unit 1 equipped with a reforming catalyst 1a, which steam-reforms using water and a hydrocarbon type fuel as the raw materials, a heating unit 2 for heating the reforming unit 1 and heating the reforming catalyst 1a to the reforming temperature and a raw material supply unit 3 for supplying the raw materials of water and a hydrocarbon type fuel to the reforming unit. The above fuel reforming apparatus further comprises a recovering gas supply unit 4 for supplying an inert gas or water vapor to the reforming unit 1, a temperature detecting unit (thermometer) 5 for detecting the temperature of the reforming catalyst 1a and a reformed gas exit 6 for discharging an obtained reformed gas. Moreover, the above fuel reforming apparatus comprises a controller 7 for controlling as follows: the supply of the raw material to the reforming unit from the raw material supply unit 3 is stopped when the temperature detecting unit 5 detects the predetermined temperature of the reforming catalyst 1a; and the reforming unit 1 is heated with the heating unit 2 while supplying an inert gas or water vapor for the predetermined duration time to the reforming unit 1 from the recovering gas supply unit 4.

Next, the operation of the fuel reforming apparatus according to the present invention will be described by way of the fuel reforming apparatus as shown in Fig. 1.

In a conventional fuel reforming apparatus, a hydrogen rich reformed gas is obtained by heating the reforming unit 1 with the heating unit 2 while supplying the raw material of a hydrocarbon type fuel and water to the reforming unit 1 from the raw material supply unit 3, thereby steam-reforming the hydrocarbon type fuel. An obtained reformed gas is discharged from the reformed gas exit 6. In such a conventional fuel reforming apparatus, the hydrocarbon type fuel used as the raw material contains sulfur component as inevitable impurity. If the amount for heating and the amounts of the raw material and water to be supplied are constant, this sulfur component decreases the activity of the reforming catalyst 1a and the temperature of the reforming catalyst 1a rises along with that.

Keeping this in mind, in the fuel reforming apparatus of the present invention as shown in Fig. 1, the temperature of the reforming catalyst 1a is detected at the temperature detecting unit 5 for detecting the temperature of the reforming catalyst. That is, the temperature of the reforming catalyst 1a rising along with the decrease in catalytic function of the reforming catalyst is detected, thereby to detect the decrease in activity of the reforming catalyst 1a.

It should be noted that the temperature of the reforming catalyst with decreased activity depends on several factors, for example, the kind of the reforming catalyst, the amount of the reforming catalyst, the amounts of the raw material and water, the kind of the hydrocarbon in the raw material, the proportion for mixing water and hydrocarbon in the raw materials.

For this reason, the maximum value for the temperature detected at the temperature detecting unit 5 for detecting the temperature of the reforming catalyst is previously determined according to these factors. When the temperature detected at the temperature detecting unit 5 has reached this maximum value, the supply of at least the raw material to the reforming unit 1 from the raw material supply unit 3 is stopped, the reforming unit 1 is heated by the heating unit 2 and, at the same time, an inert gas is supplied to the reforming unit 1 from the inert gas supply unit 4 for the predetermined duration of time.

Here, a gas sensor for detecting the concentration of hydrogen gas in the obtained reformed gas can be provided in order to recover the activity of the reforming catalyst at stopping or starting of operation, or when the concentration of hydrogen gas in the reformed gas has become not less than the predetermined concentration.

Next, a theory will be described that the supply of an inert gas or water vapor to the reforming catalyst in the reforming unit with decreased activity along with heating of the reforming unit by the heating unit can recover the activity of the reforming catalyst.

In general, hydrocarbon is steam-reformed by bringing a reforming catalyst of Ni or Ru type into contact with raw materials of water and hydrocarbon. However, as described above, if the raw materials contain sulfur component, the reforming catalyst is poisoned with the sulfur component, which results in a decrease in catalytic activity. This decrease in activity is caused by sulfur component or sulfur adsorbed on the surface of a metallic catalyst as an active site to poison the catalyst and subsequent deposition of carbon.

Hence, under the condition in which the amount to heat and the amounts of the raw material and water to be supplied are constant, if the activity of the reforming catalyst decreases due to poisoning with sulfur component in the raw material, the endothermic amount caused by the reforming reaction decreases and the temperature of the reforming catalyst rises since the steam-reforming reaction is an endothermic reaction. Therefore, a decrease in activity of the reforming catalyst can be detected by detecting such a rise in temperature.

On the basis of these observations, in the fuel reforming apparatus of the present invention, the reforming catalyst with decreased activity due to poisoning with sulfur is heated to have a high temperature of around 500 to 800 °C, for example under the current of an inert gas such as nitrogen gas, or water vapor (steam), and sulfur component adsorbed on the surface of the catalyst and deposited carbon are desorbed, thereby recovering the activity of the reforming catalyst.

This heating temperature can be determined considering the heat-resisting temperature of the reforming catalyst and the duration of time required for the recovery of the activity. A skilled person can choose appropriately according to the kind, amount, poisoning degree and the like of the reforming catalyst.

Here, the reason for creating an inert gas atmosphere or water vapor atmosphere is to prevent a change in conditions of the surface of the catalyst caused by an oxidation of the metallic catalyst upon heating. The inert gas atmosphere is more preferable considering that it does not cause the catalyst to react.

That is, by fixing the heating temperature as above and creating an inert gas atmosphere or water vapor atmosphere, the sulfur component adsorbed on the catalyst surface and the deposited carbon can be desorbed without a chemical reaction, thereby to recover the catalyst activity.

It should be noted that if the temperature of the reforming catalyst 1a has not reached the predetermined maximum temperature, an operation for recovering the catalytic activity can be performed at the normal stopping of operation when the temperature has become higher than the temperature at the beginning of the steam-reforming and has become a temperature closed to the predetermined maximum temperature. This can keep the activity of the reforming catalyst 1a always in good conditions.

Further, according to the conditions such as the concentration of sulfur component in the hydrocarbon type fuel, the amount of the raw materials to be supplied, the endurance time required for the reforming catalyst 1a, it is preferable to have a constitution such that a desulfurizer for removing sulfur component is provided at the raw material supply unit 3, thereby the hydrocarbon type fuel containing at least sulfur component is supplied to the reforming unit 1 after being passed through the desulfurizer. With such a constitution, poisoning of the reforming catalyst 1a with sulfur component can be avoided almost completely.

It should be mentioned that a case in which city gas is used as the hydrocarbon type fuel is described here, yet a fuel such as liquefied petroleum gas can also be used without problem. Further, helium and argon can be used as the inert gas other than nitrogen.

As described above, the present invention provides a fuel reforming apparatus that can detect a decrease in activity of the reforming catalyst due to sulfur poisoning by detecting a rise in temperature of the reforming catalyst and/or detecting the concentration of hydrogen gas in the reformed gas and that can automatically recover the activity of the reforming catalyst with decreased activity.

In case the adsorbing material filled in the desulfurizer breaks or cracks after a long time use, or in case sulfur component that cannot be removed with the provided desulfurizer flows into the reforming unit 1, the reforming catalyst 1a is poisoned and reduces its activity. Nevertheless, even in these cases, the fuel reforming apparatus of the present invention can recover the activity of the reforming catalyst 1a.

It should be pointed out that a regenerated gas containing sulfur component is discharged from the reformed gas exit 6 at an operation for recovering the catalyst activity, therefore it is preferable to constitute in such a way that an apparatus for purifying the regenerated gas is connected to the reformed gas exit.

In the followings, the present invention will be described by way of examples, yet the present invention is not limited to these examples.

### Example 1

Using the fuel reforming apparatus as shown in Fig. 1, a hydrogen rich reformed gas was generated by heating the reforming unit 1 with the heating unit 2 while supplying the raw material of city gas and water to the reforming unit 1 from the raw material supply unit 3 and steam-reforming the raw materials.

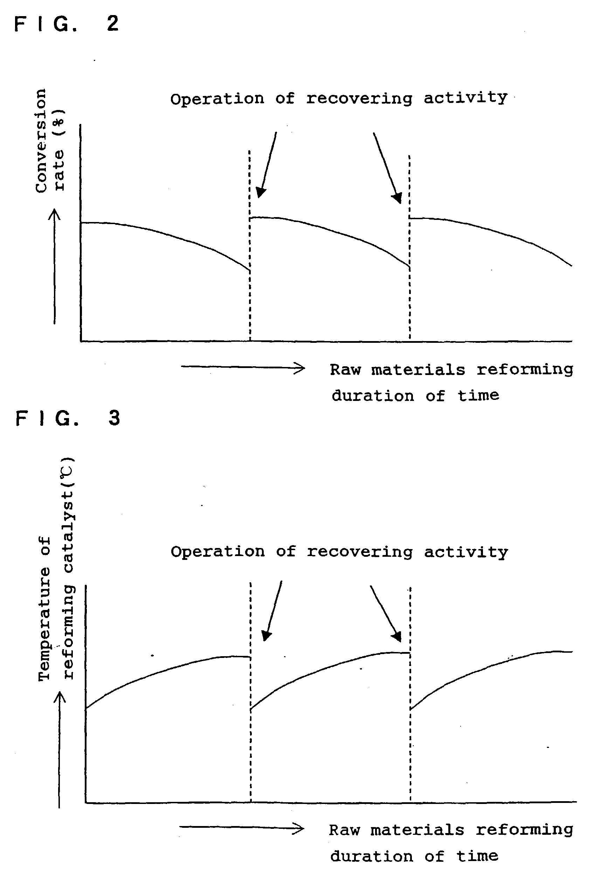

First, the steam-reforming was conducted by using, as the hydrocarbon type fuel, city gas not being subjected to desulfurating or diluting treatment at all. Fig. 2 shows the relation between the duration of time for supplying the raw material and water and the conversion rate of city gas calculated from the composition of the reformed gas discharged from the reformed gas exit 6 after the removal of steam, that is, the steam-reforming reaction rate of hydrocarbon contained in city gas. Fig. 3 shows the relation between the duration of time for supplying the raw material with water and the temperature of the reforming catalyst 1a detected at the temperature detecting unit 5.

As apparent from Fig. 2, the conversion rate declined gradually with time after the starting of the steam-reforming, whereas the temperature of the reforming catalyst 1a rose gradually. The conversion rate, which was at 99% at the starting of the reforming, declined to around 90% at 30 hours after the starting of the reforming. On the other hand, the temperature of the reforming catalyst 1a rose about 150 °C from the temperature detected just after the starting of steam reforming.

At this point, the temperature of the reforming catalyst 1a had reached the predetermined maximum temperature (around 750 °C), therefore the supply of the raw material to the reforming unit 1 from the raw material supply unit 3 was stopped. Then an operation for recovering the reforming catalyst 1a was conducted by heating the reforming unit 1 with the heating unit 2 while supplying an inert gas to the reforming unit 1 from the inert gas supply unit 4.

After the operation for recovering the activity for the predetermined duration of time (480 minutes), another steam reforming was conducted. The conversion rate rose to not less than 99%, which is almost as high as the initial performance. On the other hand, the temperature of the reforming catalyst 1a declined to the temperature detected just after the starting of the steam reforming. Consequently, it was confirmed that the activity of the reforming catalyst 1a was recovered. Further, the same operation as above was repeated for 10 times or more and subsequently the conversion rate was tested. Then, it was confirmed that the activity was recovered in the same way as at the first time.

### Example 2

Next, a steam reforming and an operation for recovering the reforming catalyst were conducted using, as the hydrocarbon type fuel, city gas diluted with 10 times of an inert gas. This assumes the case in which gas containing sulfur component with a lower concentration than that of normal city gas not subjected to a desulfuration treatment flows into the reforming unit 1 as the raw material when the desulfurizer of adsorption type breaks or cracks, for example.

The duration of time needed before the conversion rate declined to around 90% and the temperature of the reforming catalyst 1a rose to the predetermined maximum temperature (around 750 °C) was around 300 hours, which was 10 times as much as the case in which undiluted city gas was used.

As shown in Fig. 2 and Fig. 3, the change with time in the conversion rate of city gas and the temperature of the reforming catalyst 1a was the same as in the case in which undiluted city gas was used. It was confirmed that, by conducting the operation for recovering the activity as described in this example, the catalyst activity was recovered in the same manner as in the case in which undiluted city gas was used.

As described above, the present invention provides a fuel reforming apparatus that can detect a decrease in activity of the reforming catalyst due to sulfur poisoning by detecting a rise in temperature of the reforming catalyst and can automatically recover the deteriorated activity of the reforming catalyst. As a result, the deteriorated reforming catalyst, poisoned with sulfur, does not need to be replaced with a new reforming catalyst. Consequently, the time and the labor required for recovering the performance of the fuel reforming apparatus can be reduced remarkably. Moreover, once poisoned reforming catalyst can be used repeatedly for a long time, which can reduce the cost significantly.

In particular, the present invention is advantageous in that it can recover the catalytic activity at the normal starting or stopping of operation of the fuel reforming apparatus, or at a desired time other than the normal operation.

In other words, on account of the constitution, the operation and the theory as described above, the present invention provides a fuel reforming apparatus that can automatically recover the activity of the reforming catalyst decreased due to the poisoning with sulfur component. In this apparatus, the reforming catalyst with decreased activity due to poisoning with sulfur component can be used repeatedly. As a result, there is no need for replacing the poisoned reforming catalyst, which can significantly reduce the time, the labor and the cost required for an operation for recovering the activity of the reforming catalyst.

## Claims

1. A fuel reforming apparatus comprising a reforming unit having a reforming catalyst in which a reforming reaction of a raw material containing hydrogen proceeds by adding water to said raw material and a heater for heating said reforming unit, said apparatus generating a hydrogen gas by heating said reforming unit and supplying said raw material and water to said heated reforming unit,
wherein activity of said reforming catalyst is recovered by heating said catalyst in a reducing atmosphere.

2. The fuel reforming apparatus in accordance with claim 1, further comprising a recovering gas supply unit for supplying an inert gas or water vapor to said reforming unit,
wherein activity of said reforming catalyst is recovered by heating said catalyst while supplying said inert gas or water vapor to said reforming unit.

3. The fuel reforming apparatus in accordance with claim 1, further comprising a thermometer for detecting a temperature of said reforming catalyst,
wherein activity of said reforming catalyst is recovered by heating said reforming catalyst while supplying said inert gas or water vapor to said reforming unit, after stopping supplying said raw material to said reforming unit when a temperature of said reforming catalyst becomes a predetermined temperature.

4. The fuel reforming apparatus in accordance with claim 1, further comprising a sensor for detecting a concentration of hydrogen gas, wherein activity of said reforming catalyst is recovered when a concentration of hydrogen gas becomes not higher than a predetermined concentration.

5. The fuel reforming apparatus in accordance with claim 1, further comprising a desulfurizer for removing a sulfide from said raw material.
